(19) Europäisches Patentamt
European Patent Office
Office européen des brevets

(11) **EP 3 885 236 A1**

(12) **EUROPEAN PATENT APPLICATION**

(43) Date of publication:
**29.09.2021 Bulletin 2021/39**

(51) Int Cl.:
**B62D 6/00** *(2006.01)*     **B62D 6/04** *(2006.01)*

(21) Application number: **21164544.5**

(22) Date of filing: **24.03.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.03.2020   JP 2020057677**

(71) Applicant: **JTEKT CORPORATION**
**Chuo-ku,**
**Osaka-shi,**
**Osaka 542-8502 (JP)**

(72) Inventor: **KODERA, Takashi**
**Osaka-shi, Osaka 542-8502 (JP)**

(74) Representative: **Winter, Brandl - Partnerschaft mbB**
**Alois-Steinecker-Straße 22**
**85354 Freising (DE)**

(54) **STEERING CONTROL DEVICE**

(57)    A steering control device includes a control unit, and a drive circuit. The control unit is configured to calculate a torque command value which is a target value of the motor torque based on execution of angle control for adjusting a convertible angle which is able to be converted to a rotation angle of the motor to a target angle, calculate the motor control signal based on the torque command value, and change a control gain which is used for the angle control based on a detection value from an axial force-related sensor configured to detect an axial force-related value related to an axial force applied to a turning shaft connected to turning wheels (5).

FIG. 2

EP 3 885 236 A1

**Description**

BACKGROUND OF THE INVENTION

1. Field of the Invention

The invention relates to a steering control device.

2. Description of Related Art

In the related art, an electric power steering system (EPS) that applies an assist force for assisting a driver's steering using a motor is known as a vehicular steering device. In a steering control device that controls such an EPS, operation of a motor is controlled by performing angle feedback control such that a turning angle of turning wheels conforms to a target turning angle to achieve improvement in steering feeling or the like, for example, as described in Japanese Unexamined Patent Application Publication No. 2017-149373.

Recently, a steer-by-wire (SBW) steering device (in other words, a steer-by-wire steering system) in which transmission of power between a steering unit that is steered by a driver and a turning unit that turns turning wheels according to the driver's steering is cut off has been developed as a vehicular steering device. In a steering control device that controls such an SBW steering device, operation of a motor is controlled by performing angle feedback control to achieve improvement in a steering feeling or turning characteristics of the turning wheels, for example, as described in Japanese Unexamined Patent Application Publication No. 2017-165219.

SUMMARY OF THE INVENTION

Recently, it has been required to control operation of a motor such that a driver's uncomfortable feeling (a driver's feeling of inconvenience) can be further decreased in various traveling conditions, but it cannot be said that the required level is satisfied with the configuration according to the related art. Accordingly, there is demand for new technology capable of further decreasing a driver's uncomfortable feeling.

The invention provides a steering control device that can decrease a driver's uncomfortable feeling.

According to an aspect of the invention, there is provided a steering control device configured to control a steering device to which a motor torque is applied from an actuator with a motor as a drive source, the steering control device including: a control unit configured to output a motor control signal for controlling operation of the motor; and a drive circuit configured to supply a drive electric power to the motor based on the motor control signal. The control unit is configured to calculate a torque command value which is a target value of the motor torque based on execution of angle control for adjusting a convertible angle which is able to be converted to a rotation angle of the motor to a target angle, to calculate the motor control signal based on the torque command value, and to change a control gain which is used for the angle control based on a detection value from an axial force-related sensor configured to detect an axial force-related value related to an axial force applied to a turning shaft connected to turning wheels.

With this configuration, since the control gain which is used for the angle control is changed based on the axial force-related value, it is possible to achieve optimization of angle control according to an axial force applied to the turning shaft and to decrease a driver's uncomfortable feeling.

In the steering control device, the axial force-related sensor may be an axial force sensor that detects the axial force which is applied to the turning shaft, and the control unit may be configured to change the control gain based on a detected axial force value detected by the axial force sensor.

With this configuration, since the control gain is adjusted based on the detected axial force value which is the axial force directly detected by the axial force sensor, it is possible to achieve optimization of angle control in appropriate consideration of the axial force applied to the turning shaft.

In the steering control device, the axial force-related sensor may be a tire force sensor that detects at least one of a longitudinal load in a vehicle longitudinal direction, a lateral load in a vehicle lateral direction, a vertical load in a vehicle vertical direction, a roll moment load in a roll direction, a pitch moment load in a pitch direction, and a yaw moment load in a yaw direction which are applied to each of the turning wheels, and the control unit may be configured to change the control gain based on at least one of a detected value of the longitudinal load, a detected value of the lateral load, a detected value of the vertical load, a detected value of the roll moment load, a detected value of the pitch moment load, and a detected value of the yaw moment load, the at least one of the detected value of the longitudinal load, the detected value of the lateral load, the detected value of the vertical load, the detected value of the roll moment load, the detected value of the pitch moment load, and the detected value of the yaw moment load being obtained by the tire force sensor.

The axial force applied to the turning shaft is obtained by combining the longitudinal load, the lateral load, the vertical load, the roll moment load, the pitch moment load, and the yaw moment load which are applied to each of the turning wheels and transmitted to the turning shaft. Accordingly, with this configuration, it is possible to achieve fine optimization of angle control based on the components which affect the axial force.

In the steering control device, the angle control may include feedback control for causing the convertible angle to conform to the target angle, and the control gain may include a feedback gain which is used for the feedback control.

In the steering control device, the angle control may include feedforward control based on the target angle, and the control gain may include a feedforward gain which is used for the feedforward control.

In the steering control device, the angle control may include damping control based on a target angular velocity which is a rate of change of the target angle, and the control gain may include a damping gain which is used for the damping control.

With these configurations, it is possible to appropriately adjust the convertible angle to a target angle.

According to the above-mentioned aspect of the invention, it is possible to decrease a driver's uncomfortable feeling.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a diagram schematically illustrating a configuration of a steering device according to a first embodiment;
FIG. 2 is a block diagram illustrating a steering control device according to the first embodiment;
FIG. 3 is a block diagram illustrating a target reaction torque calculating unit according to the first embodiment;
FIG. 4 is a block diagram illustrating a target turning torque calculating unit according to the first embodiment;
FIG. 5 is a block diagram illustrating an angle feedback torque calculating unit according to the first embodiment;
FIG. 6 is a block diagram illustrating a proportional gain calculating unit according to the first embodiment;
FIG. 7 is a block diagram illustrating an angle feedforward torque calculating unit according to the first embodiment;
FIG. 8 is a block diagram illustrating a damping torque calculating unit according to the first embodiment;
FIG. 9 is a diagram schematically illustrating loads which are applied to a turning wheel; and
FIG. 10 is a block diagram illustrating a proportional gain calculating unit according to a second embodiment.

DETAILED DESCRIPTION OF EMBODIMENTS

First embodiment

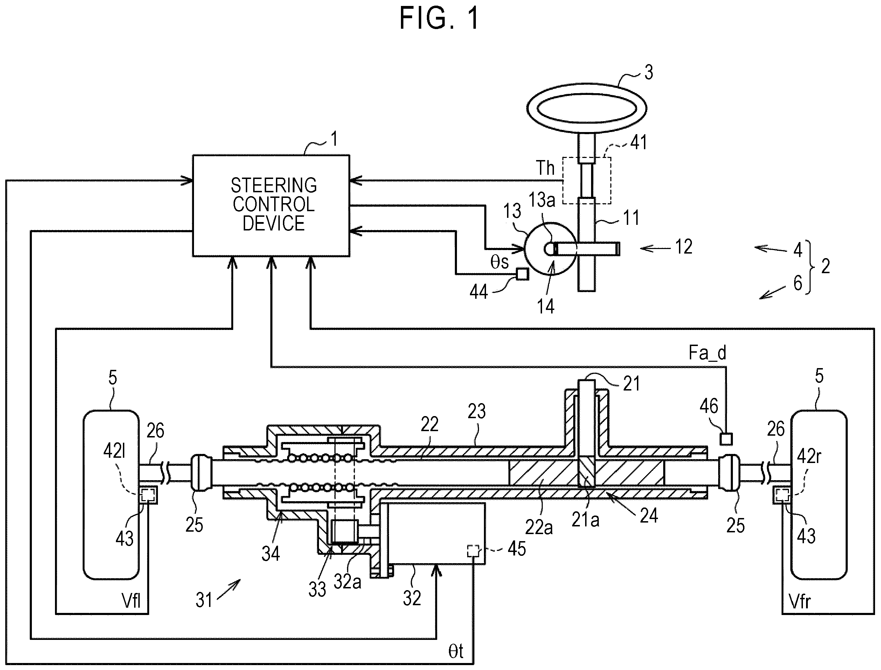

Hereinafter, a steering control device according to a first embodiment will be described with reference to the accompanying drawings. As illustrated in FIG. 1, a steering device 2 which is controlled by the steering control device 1 according to this embodiment is configured as a steer-by-wire steering device (in other words, a steer-by-wire steering system). The steering device 2 includes a steering unit 4 that is steered by a driver using a steering wheel 3 and a turning unit 6 that turns turning wheels 5 in accordance with the driver's steering of the steering unit 4.

The steering unit 4 includes a steering shaft 11 to which a steering wheel 3 is fixed and a steering-side actuator 12 that applies a steering reaction force to the steering wheel 3 via the steering shaft 11. The steering reaction force is a force against a driver's steering. The steering-side actuator 12 includes a steering-side motor 13 that serves as a drive source and a steering-side reduction gear 14 that reduces rotation of the steering-side motor 13 and transmits the reduced rotation to the steering shaft 11. That is, the steering-side motor 13 applies a motor torque thereof as the steering reaction force. For example, a three-phase surface permanent magnet synchronous motor (SPMSM) is employed as the steering-side motor 13 in this embodiment.

The turning unit 6 includes a pinion shaft 21, a rack shaft 22 serving as a turning shaft that is connected to the pinion shaft 21, a rack housing 23 that accommodates the rack shaft 22 such that it can reciprocate, and a rack and pinion mechanism 24 that includes the pinion shaft 21 and the rack shaft 22. The pinion shaft 21 and the rack shaft 22 are arranged to have a predetermined crossing angle. Pinion teeth 21a formed in the pinion shaft 21 and rack teeth 22a formed in the rack shaft 22 engage with each other to constitute the rack and pinion mechanism 24. That is, the pinion shaft 21 corresponds to a rotation shaft whose rotation angle can be converted to a turning angle of the turning wheels 5. Tie rods 26 are respectively connected to both ends of the rack shaft 22 via rack ends 25 each of which is formed of a ball joint. The tips of the tie rods 26 are connected to knuckles (not illustrated) to which the right and left turning wheels 5 are assembled.

The turning unit 6 includes a turning-side actuator 31 that applies a turning force for turning the turning wheels 5 to the rack shaft 22. The turning-side actuator 31 includes a turning-side motor 32 that serves as a drive source, a transmission mechanism 33, and a conversion mechanism 34. The turning-side actuator 31 applies a turning force to the turning unit 6 by transmitting rotation of the turning-side motor 32 to the conversion mechanism 34 via the transmission mechanism 33 and causing the conversion mechanism 34 to convert the rotation to reciprocating movement of the rack shaft 22. That is, the turning-side motor 32 applies a motor torque thereof as the turning force. In this embodiment, for example, a surface permanent magnet synchronous motor is employed as the turning-side motor 32, for example, a belt mechanism is employed as the transmission mechanism 33, and, for example, a ball screw mechanism is employed as the conversion mechanism 34.

In the steering device 2 having the aforementioned configuration, a turning angle of the turning wheels 5 is changed by applying the turning force from the turning-side actuator 31 to the rack shaft 22 according to a driver's steering operation. At this time, a steering reaction force is applied to the steering wheel 3 from the steering-side actuator 12.

An electrical configuration according to this embodiment will be described below. The steering control device 1 is connected to the steering-side motor 13 and the turning-side motor 32 and controls operation thereof. The steering control device 1 includes a central processing unit (CPU) and a memory which are not illustrated. Various types of control are performed by causing the CPU to execute a program stored in the memory at intervals of a predetermined operation cycle.

The steering control device 1 controls the steering-side motor 13 and the turning-side motor 32 with reference to state quantities which are detected by various sensors. The state quantities include a steering torque Th which is detected by a torque sensor 41, a wheel speed Vfl which is detected by a front-left wheel sensor 421, and a wheel speed Vfr which is detected by a front-right wheel sensor 42r. The torque sensor 41 is provided on the steering wheel 3 side of a part of the steering shaft 11 which is connected to a steering-side reduction gear 14. The steering torque Th is a torque which is input by a driver using the steering wheel 3. The front-left wheel sensor 421 and the front-right wheel sensor 42r are provided in hub units 43 by which the turning wheels 5 are rotatably supported via drive shafts (not illustrated).

The state quantities include a rotation angle $\theta s$ of an output shaft 13a of the steering-side motor 13 which is detected by a steering-side rotation angle sensor 44 and a rotation angle $\theta t$ of an output shaft 32a of the turning-side motor 32 which is detected by a turning-side rotation angle sensor 45. The rotation angles $\theta s$ and $\theta t$ are detected as relative angles in a range of 360°. The steering torque Th and the rotation angles $\theta s$ and $\theta t$ are detected, for example, as being positive values when rightward steering is performed and as being negative values when leftward steering is performed.

The state quantities include a detected axial force value Fa_d which is detected by an axial force sensor 46 which is an axial force-related sensor. The detected axial force value Fa_d is a detected value of an axial force which is applied to the rack shaft 22. For example, a sensor that detects an axial force based on a change in pressure due to a stroke of the rack shaft 22 is employed as the axial force sensor 46.

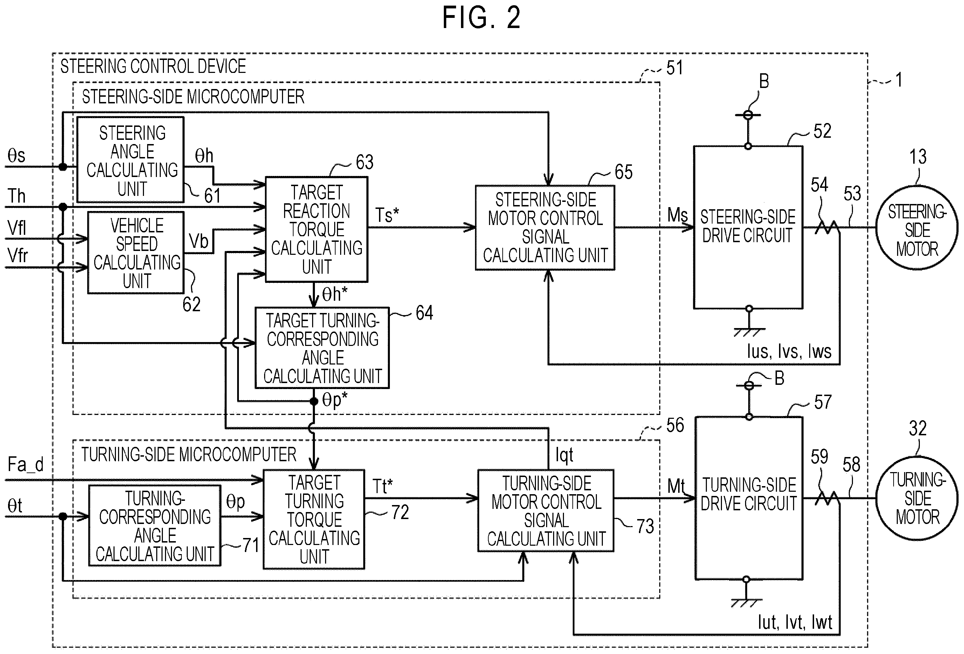

The configuration of the steering control device 1 will be described below in detail. As illustrated in FIG. 2, the steering control device 1 includes a steering-side microcomputer 51 that outputs a steering-side motor control signal Ms and a steering-side drive circuit 52 that supplies drive electric power to the steering-side motor 13 based on the steering-side motor control signal Ms. Current sensors 54 that are provided in connection lines 53 between the steering-side drive circuit 52 and motor coils in phases of the steering-side motor 13 are connected to the steering-side microcomputer 51. The current sensors 54 detect phase current values Ius, Ivs, and Iws of phase currents of the steering-side motor 13, the phase currents flowing in the connection lines 53. In FIG. 2, for the purpose of convenience of description, the connection lines 53 of phases and the current sensors 54 of phases are collectively illustrated as being single.

The steering control device 1 includes a turning-side microcomputer 56 that is a control unit configured to output a turning-side motor control signal Mt, and a turning-side drive circuit 57 configured to apply drive electric power to the turning-side motor 32 based on the turning-side motor control signal Mt. Current sensors 59 that are provided in connection lines 58 between the turning-side drive circuit 57 and motor coils in phases of the turning-side motor 32 are connected to the turning-side microcomputer 56. The current sensors 59 detect phase current values Iut, Ivt, and Iwt of phase currents of the turning-side motor 32, the phase currents flowing in the connection lines 58. In FIG. 2, for the purpose of convenience of description, the connection lines 58 of phases and the current sensors 59 of phases are collectively illustrated as being single.

A known PWM inverter including a plurality of switching elements such as field effect transistors (FETs) is employed in each of the steering-side drive circuit 52 and the turning-side drive circuit 57. The steering-side motor control signal Ms and the turning-side motor control signal Mt are gate-on/off signals for prescribing ON/OFF states of the switching elements.

Drive electric power is supplied from an onboard power supply B to the steering-side motor 13 based on the steering-side motor control signal Ms output to the steering-side drive circuit 52. Accordingly, the steering control device 1 controls a torque which is generated from the steering-side motor 13 by supplying the drive electric power to the steering-side motor 13. Drive electric power is supplied from the onboard power supply B to the turning-side motor 32 based on the turning-side motor control signal Mt output to the turning-side drive circuit 57. Accordingly, the steering control device 1 controls a torque which is generated from the turning-side motor 32 by supplying the drive electric power to the turning-side motor 32.

The configuration of the steering-side microcomputer 51 will be described below. The steering-side microcomputer 51 calculates a steering-side motor control signal Ms by performing operation processes indicated by the following control blocks in each of predetermined operation cycles. The steering torque Th, the wheel speeds Vfl and Vfr, the rotation angle θs, the phase current values Ius, Ivs, and Iws, and a q-axis current value Iqt which is a drive current of the turning-side motor 32 are input to the steering-side microcomputer 51. Then, the steering-side microcomputer 51 calculates the steering-side motor control signal Ms based on these state quantities.

Specifically, the steering-side microcomputer 51 includes a steering angle calculating unit 61 that calculates a steering angle θh of the steering wheel 3 based on the rotation angle θs, and a vehicle speed calculating unit 62 that calculates a vehicle speed Vb based on the wheel speeds Vfl and Vfr. The steering-side microcomputer 51 includes a target reaction torque calculating unit 63 that calculates a target reaction torque Ts*, a target turning-corresponding angle calculating unit 64 that calculates a target turning-corresponding angle θp* which is a target angle, and a steering-side motor control signal calculating unit 65 that calculates the steering-side motor control signal Ms. The target reaction torque Ts* is a target value of a motor torque which is output from the steering-side motor 13. The target turning-corresponding angle θp* is a target value of a turning-corresponding angle θp which is a rotation angle of a rotation shaft, that is, the pinion shaft 21, which can be converted to the turning angle of the turning wheels 5.

The rotation angle θs of the steering-side motor 13 is input to the steering angle calculating unit 61. The steering angle calculating unit 61 converts the rotation angle θs to an absolute angle in a range including a range exceeding 360°, for example, by counting the number of turns of the steering-side motor 13 from a steering neutral position, and acquires the absolute angle. The steering angle calculating unit 61 calculates the steering angle θh by multiplying the rotation angle which has been converted to the absolute angle by a first conversion factor. The first conversion factor is set in advance based on a rotation speed ratio of the steering-side reduction gear 14. The calculated steering angle θh is output to the target reaction torque calculating unit 63.

The wheel speeds Vfl and Vfr are input to the vehicle speed calculating unit 62. The vehicle speed calculating unit 62 calculates, for example, an average value of the wheel speeds Vfl and Vfr as a vehicle speed Vb which is a speed of the vehicle body. The calculated vehicle speed Vb is output to the target reaction torque calculating unit 63.

The steering torque Th, the vehicle speed Vb, the steering angle θh, the q-axis current value Iqt, and the target turning-corresponding angle θp* are input to the target reaction torque calculating unit 63. As will be described later, the target reaction torque calculating unit 63 calculates the target reaction torque Ts* based on the state quantities and outputs the calculated target reaction torque Ts* to the steering-side motor control signal calculating unit 65. The target reaction torque calculating unit 63 outputs a target steering angle θh* which is acquired in the process of calculating the target reaction torque Ts* to the target turning-corresponding angle calculating unit 64. The target steering angle θh* is a target value of the steering angle θh.

The target steering angle θh* and the steering torque Th are input to the target turning-corresponding angle calculating unit 64. The target turning-corresponding angle calculating unit 64 calculates the target turning-corresponding angle θp* based on the state quantities. The target turning-corresponding angle calculating unit 64 calculates the target turning-corresponding angle θp* such that a steering angle ratio of the steering angle θh and the turning-corresponding angle θp is basically 1:1.

Specifically, the target turning-corresponding angle calculating unit 64 calculates a value obtained by adding a compensation angle based on the steering torque Th to the target steering angle θh*, as the target turning-corresponding angle θp*. The compensation angle is an angle indicating a torsion of the steering shaft 11 which is caused by inputting the steering torque Th, and is acquired by multiplying the steering torque Th by a preset compensation coefficient. The calculated target turning-corresponding angle θp* is output to the target reaction torque calculating unit 63 and the turning-side microcomputer 56.

In addition to the target reaction torque Ts*, the rotation angle θs and the phase current values Ius, Ivs, and Iws are input to the steering-side motor control signal calculating unit 65. The steering-side motor control signal calculating unit 65 calculates a d-axis current command value Ids* on the d axis and a q-axis current command value Iqs* on the q axis in the dq coordinate system based on the target reaction torque Ts*. The current command values Ids* and Iqs* represent a current command value on the d axis and a current command value on the q axis in the dq coordinate system.

Specifically, the steering-side motor control signal calculating unit 65 calculates the q-axis current command value Iqs* of which the absolute value increases as the absolute value of the target reaction torque Ts* increases. In this embodiment, the d-axis current command value Ids* on the d axis is basically set to zero. The steering-side motor control signal calculating unit 65 calculates a steering-side motor control signal Ms by performing current feedback control in the dq coordinate system. In the following description, the word "feedback" may be referred to as "F/B."

More specifically, the steering-side motor control signal calculating unit 65 calculates a d-axis current value Ids and a q-axis current value Iqs which are actual current values of the steering-side motor 13 in the dq coordinate system by mapping the phase current values Ius, Ivs, and Iws onto the dq coordinates based on the rotation angle θs. Then, the steering-side motor control signal calculating unit 65 calculates a target voltage value based on a current difference on the d axis and a current difference on the q axis such that the d-axis current value Ids conforms to the d-axis current command value Ids* and the q-axis current value Iqs conforms to the q-axis current command value Iqs*. The steering-side motor control signal calculating unit 65 calculates the steering-side motor control signal Ms having a duty ratio (i.e., duty cycle) based on the target voltage value.

The calculated steering-side motor control signal Ms is output to the steering-side drive circuit 52. Accordingly, drive electric power corresponding to the steering-side motor control signal Ms is supplied from the steering-side drive circuit 52 to the steering-side motor 13. A steering reaction force indicated by the target reaction torque Ts* is applied from the steering-side motor 13 to the steering wheel 3.

The configuration of the turning-side microcomputer 56 will be described below. The turning-side microcomputer 56 calculates a turning-side motor control signal Mt by performing operation processes indicated by the following control blocks in each of predetermined operation cycles. The rotation angle θt, the target turning-corresponding angle θp*, the detected axial force value Fa d, and the phase current values Iut, Ivt, and Iwt of the turning-side motor 32 are input to the turning-side microcomputer 56. Then, the turning-side microcomputer 56 calculates the turning-side motor control signal Mt based on the state quantities and outputs the calculated turning-side motor control signal Mt.

Specifically, the turning-side microcomputer 56 includes a turning-corresponding angle calculating unit 71 that calculates a turning-corresponding angle θp based on the rotation angle θt, a target turning torque calculating unit 72 that calculates a target turning torque Tt*, and a turning-side motor control signal calculating unit 73 that calculates a turning-side motor control signal Mt. The target turning torque Tt* is a target value of the motor torque which is output from the turning-side motor 32, and corresponds to a torque command value. Accordingly, the target turning torque calculating unit 72 corresponds to a torque command value calculating unit.

The rotation angle θt of the turning-side motor 32 is input to the turning-corresponding angle calculating unit 71. The turning-corresponding angle calculating unit 71 converts the input rotation angle θt to an absolute angle, for example, by counting the number of turns of the turning-side motor 32 from a neutral position at which the vehicle travels straight, and acquires the absolute angle. The turning-corresponding angle calculating unit 71 calculates the turning-corresponding angle θp by multiplying the rotation angle which has been converted to the absolute angle by a second conversion factor. The second conversion factor is set in advance based on a speed reduction ratio of the transmission mechanism 33, a lead of the conversion mechanism 34, and a rotation speed ratio of the rack and pinion mechanism 24. That is, the turning-corresponding angle θp corresponds to a convertible angle which can be converted to the rotation angle θt of the turning-side motor 32. The turning-corresponding angle θp substantially matches the steering angle θh of the steering wheel 3 when it is assumed that the pinion shaft 21 is connected to the steering shaft 11. The calculated turning-corresponding angle θp is output to the target turning torque calculating unit 72.

The target turning-corresponding angle θp*, the turning-corresponding angle θp, and the detected axial force value Fa_d are input to the target turning torque calculating unit 72. The target turning torque calculating unit 72 calculates a target turning torque Tt* by performing angle control for adjusting the turning-corresponding angle θp to the target turning-corresponding angle θp* as will be described later, and outputs the calculated target turning torque Tt* to the turning-side motor control signal calculating unit 73.

In addition to the target turning torque Tt*, the rotation angle θt and the phase current values Iut, Ivt, and Iwt are input to the turning-side motor control signal calculating unit 73. The turning-side motor control signal calculating unit 73 calculates a d-axis current command value Idt* on the d axis and a q-axis current command value Iqt* on the q axis in the dq coordinate system based on the target turning torque Tt*.

Specifically, the turning-side motor control signal calculating unit 73 calculates the q-axis current command value Iqt* of which the absolute value increases as the absolute value of the target turning torque Tt* increases. In this embodiment, the d-axis current command value Idt* on the d axis is basically set to zero. Similarly to the steering-side motor control signal calculating unit 65, the turning-side motor control signal calculating unit 73 calculates the turning-side motor control signal Mt with execution of current feedback (F/B) control in the dq coordinate system. The q-axis current value Iqt which is calculated in the process of calculating the turning-side motor control signal Mt is output to the target reaction torque calculating unit 63.

The calculated turning-side motor control signal Mt is output to the turning-side drive circuit 57. Accordingly, drive electric power corresponding to the turning-side motor control signal Mt is supplied to the turning-side motor 32 from the turning-side drive circuit 57. The turning-side motor 32 applies a turning force indicated by the target turning torque Tt* to the turning wheels 5.

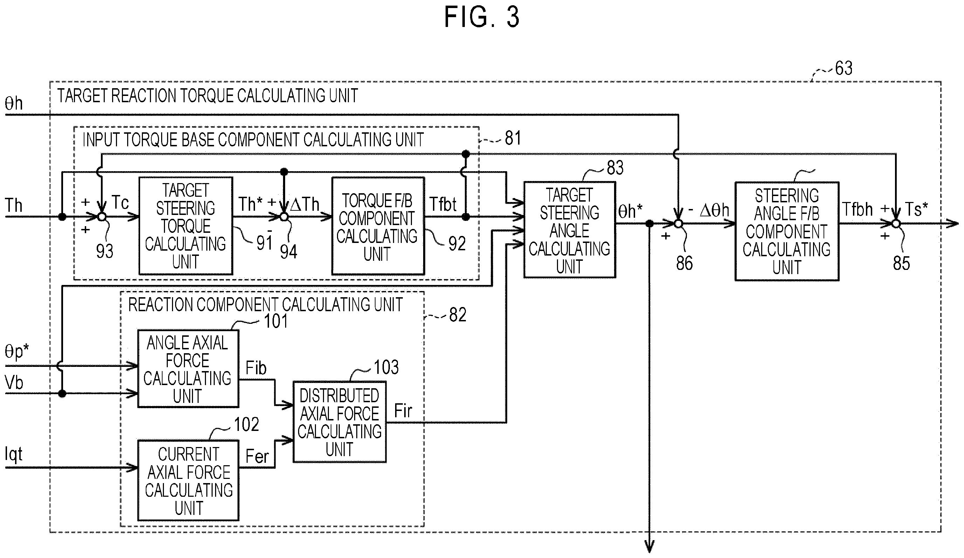

The configuration of the target reaction torque calculating unit 63 will be described below. As illustrated in FIG. 3, the target reaction torque calculating unit 63 includes an input torque base component calculating unit 81 that calculates a torque F/B component Tfbt as an input torque base component and a reaction component calculating unit 82 that calculates a reaction component Fir. The torque F/B component Tfbt is a force for rotating the steering wheel 3 in a driver's steering direction. The reaction component Fir is a force against the rotation of the steering wheel 3 due to the driver's steering. The target reaction torque calculating unit 63 includes a target steering angle calculating unit 83 that calculates a target steering angle θh* and a steering angle F/B component calculating unit 84 that calculates a steering angle F/B component Tfbh. The target reaction torque calculating unit 63 calculates a target reaction torque Ts* based on the torque F/B component Tfbt and the steering angle F/B component Tfbh.

Specifically, the steering torque Th is input to the input torque base component calculating unit 81. The input torque base component calculating unit 81 includes a target steering torque calculating unit 91 that calculates the target steering torque Th* and a torque F/B component calculating unit 92 that calculates the torque F/B component Tfbt with execution of torque F/B control. The target steering torque Th* is a target value of the steering torque Th which is to be input to the steering unit 4.

A drive torque Tc which is obtained by causing an adder 93 to add the torque F/B component Tfbt to the steering torque Th is input to the target steering torque calculating unit 91. The target steering torque calculating unit 91 calculates the target steering torque Th* of which the absolute value increases as the absolute value of the drive torque Tc increases. The drive torque Tc is a torque for turning the turning wheels 5 in the steering device in which the steering unit 4 and the turning unit 6 are mechanically connected, and approximately matches an axial force which is applied to the rack shaft 22. That is, the drive torque Tc corresponds to a calculational axial force which is obtained by estimating the axial force applied to the rack shaft 22.

A torque difference ΔTh which is obtained by causing a subtractor 94 to subtract the target steering torque Th* from the steering torque Th is input to the torque F/B component calculating unit 92. The torque F/B component calculating unit 92 calculates the torque F/B component Tfbt by performing torque F/B control for causing the steering torque Th to conform to the target steering torque Th* based on the torque difference ΔTh. Specifically, the torque F/B component calculating unit 92 calculates, as the torque F/B component Tfbt, a sum of a proportional component, an integral component, and a differential component using the torque difference ΔTh as an input. The calculated torque F/B component Tfbt is output to the adders 85 and 93 and the target steering angle calculating unit 83.

The vehicle speed Vb and the q-axis current value Iqt of the turning-side motor 32, and the target turning-corresponding angle θp* are input to the reaction component calculating unit 82. The reaction component calculating unit 82 calculates the reaction component Fir corresponding to the axial force applied to the rack shaft 22 based on the input state quantities. The reaction component Fir corresponds to the calculational axial force obtained by estimating the axial force applied to the rack shaft 22.

Specifically, the reaction component calculating unit 82 includes an angle axial force calculating unit 101 that calculates an angle axial force Fib and a current axial force calculating unit 102 that calculates a current axial force Fer. The angle axial force Fib and the current axial force Fer are calculated in the dimension (N·m) of a torque. The reaction component calculating unit 82 includes a distributed axial force calculating unit 103 that calculates the reaction component Fir by summing the angle axial force Fib and the current axial force Fer at predetermined distribution proportions which are individually set. The predetermined distribution proportions are set such that an axial force applied to the turning wheels 5 from a road surface, that is, road surface information transmitted from the road surface, is reflected in the reaction component Fir.

The target turning-corresponding angle θp* and the vehicle speed Vb are input to the angle axial force calculating unit 101. The angle axial force calculating unit 101 calculates the angle axial force Fib based on the target turning-corresponding angle θp* and the vehicle speed Vb. The angle axial force Fib is an ideal value of an axial force in a model which is arbitrarily set and is an axial force that does not include road surface information, such as minute unevenness that does not affect the lateral behavior of the vehicle or stepped parts affecting the lateral behavior of the vehicle.

Specifically, the angle axial force calculating unit 101 calculates the angle axial force Fib of which the absolute value increases as the absolute value of the target turning-corresponding angle θp* increases. The angle axial force calculating unit 101 calculates the angle axial force Fib of which the absolute value increases as the vehicle speed Vb increases. The calculated angle axial force Fib is output to the distributed axial force calculating unit 103.

The q-axis current value Iqt of the turning-side motor 32 is input to the current axial force calculating unit 102. The current axial force calculating unit 102 calculates an axial force applied to the turning wheels 5 based on the q-axis current value Iqt. The current axial force Fer is an estimated value of the axial force applied to the turning wheels 5 and is an axial force including road surface information.

Specifically, the current axial force calculating unit 102 calculates the absolute value of the current axial force Fer of which the absolute value increases as the absolute value of the q-axis current value Iqt increases. This is based on the assumption that a torque applied from the turning-side motor 32 to the rack shaft 22 and a torque based on a force applied from the road surface to the turning wheels 5 are balanced. The calculated current axial force Fer is output to the distributed axial force calculating unit 103.

The angle axial force Fib and the current axial force Fer are input to the distributed axial force calculating unit 103. In the distributed axial force calculating unit 103, a current distribution gain indicating the distribution proportion of the current axial force Fer and an angle distribution gain indicating the distribution proportion of the angle axial force Fib are set in advance by experiment or the like. The distributed axial force calculating unit 103 calculates the reaction component Fir by summing a value obtained by multiplying the angle axial force Fib by the angle distribution gain and a value obtained by multiplying the current axial force Fer by the current distribution gain. The calculated reaction component Fir is output to the target steering angle calculating unit 83.

The vehicle speed Vb, the steering torque Th, the torque F/B component Tfbt, and the reaction component Fir are input to the target steering angle calculating unit 83. The target steering angle calculating unit 83 calculates the target steering angle θh* using a steering model formula of Expression (1) in which the target steering angle θh* is correlated with an input torque Tin* which is obtained by adding the steering torque Th to the torque F/B component Tfbt and subtracting the reaction component Fir therefrom.

$$Tin^* = C \cdot θh^{*'} + J \cdot θh^{*''} \qquad \ldots(1)$$

This model formula defines and represents a relationship between a torque of a rotation shaft rotating with rotation of the steering wheel 3 and the rotation angle of the rotation shaft in a structure in which the steering wheel 3 and the turning wheels 5 are mechanically connected, that is, a structure in which the steering unit 4 and the turning unit 6 are mechanically connected. This model formula is expressed using a viscosity coefficient C modeling friction or the like of the steering device 2 and an inertia coefficient J modeling the inertia of the steering device 2. The viscosity coefficient C and the inertia coefficient J are set to vary depending on the vehicle speed Vb. The target steering angle θh* which is calculated using the model formula is output to the target turning-corresponding angle calculating unit 64.

An angle difference Δθh which is obtained by causing a subtractor 86 to subtract the steering angle θh from the target steering angle θh* is input to the steering angle F/B component calculating unit 84. The steering angle F/B component calculating unit 84 calculates the steering angle F/B component Tfbh by performing angle F/B control for causing the steering angle θh to conform to the target steering angle θh* based on the angle difference Δθh. Specifically, the steering angle F/B component calculating unit 84 calculates a sum of a proportional component, an integral component, and a differential component using the angle difference Δθh as an input as the steering angle F/B component Tfbh. The calculated steering angle F/B component Tfbh is output to an adder 85.

The target reaction torque calculating unit 63 calculates the target reaction torque Ts* by causing the adder 85 to add the steering angle F/B component Tfbh to the torque F/B component Tfbt. The calculated target reaction torque Ts* is output to the steering-side motor control signal calculating unit 65.

As described above, the target reaction torque calculating unit 63 calculates the target steering torque Th* which is used for torque F/B control, based on the drive torque Tc which is a calculational axial force, calculates the target steering angle θh* which is used for angle F/B control, based on the reaction component Fir which is a calculational axial force, and calculates the target reaction torque Ts* by summing them. Accordingly, a steering reaction force which is applied from the steering-side motor 13 is basically a force against the driver's steering and may also serve as a force for assisting with the driver's steering depending on the difference between the calculational axial force and the actual axial force applied to the rack shaft 22.

The configuration of the target turning torque calculating unit 72 will be described below. The target turning torque calculating unit 72 illustrated in FIG. 2 calculates the target turning torque Tt* with execution of angle control for adjusting the turning-corresponding angle θp to the target turning-corresponding angle θp*. The target turning torque calculating unit 72 according to this embodiment performs, as angle control, angle F/B control for causing the turning-corresponding angle θp to conform to the target turning-corresponding angle θp*, feedforward control based on the target turning-corresponding angle θp*, and damping control based on a turning-corresponding angular velocity ωp which is a rate of change of the turning-corresponding angle θp. The target turning torque calculating unit 72 changes a control gain which is used to perform the angle control, based on the detected axial force value Fa_d detected by the axial force sensor 46. Accordingly, optimization of the angle control is achieved. In the following description, a word "feedforward" may be referred to as "F/F."

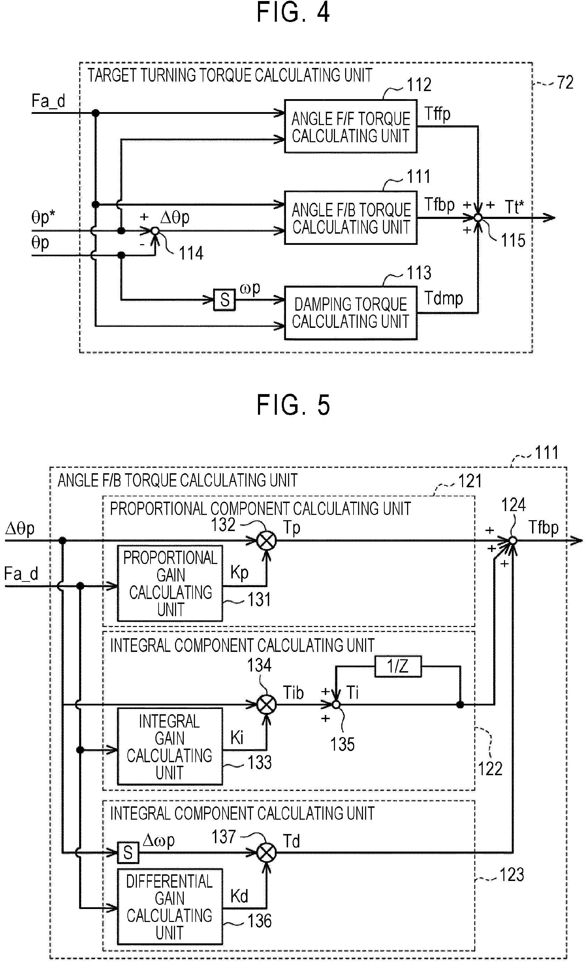

Specifically, as illustrated in FIG. 4, the target turning torque calculating unit 72 includes an angle F/B torque calculating unit 111 that calculates an angle F/B torque Tfbp, an angle F/F torque calculating unit 112 that calculates an angle F/F torque Tffp, and a damping torque calculating unit 113 that calculates a damping torque Tdmp. The target turning torque calculating unit 72 calculates a value obtained by adding the angle F/F torque Tffp, the angle F/B torque Tfbp, and the damping torque Tdmp as the target turning torque Tt*.

An angle difference Δθp which is obtained by causing a subtractor 114 to subtract the turning-corresponding angle θp from the target turning-corresponding angle θp* and the detected axial force value Fa_d are input to the angle F/B torque calculating unit 111. The angle F/B torque calculating unit 111 calculates the angle F/B torque Tfbp by performing angle F/B control as will be described later based on the input state quantities. The calculated angle F/B torque Tfbp is output to an adder 115.

The target turning-corresponding angle θp* and the detected axial force value Fa_d are input to the angle F/F torque calculating unit 112. The angle F/F torque calculating unit 112 calculates the angle F/F torque Tffp by performing angle F/F control as will be described later based on the input state quantities. The calculated angle F/F torque Tffp is output to the adder 115.

A turning-corresponding angular velocity ωp which is obtained by differentiating the turning-corresponding angle θp and the detected axial force value Fa_d are input to the damping torque calculating unit 113. The damping torque calculating unit 113 calculates the damping torque Tdmp by performing damping control as will be described later based on the input state quantities. The calculated damping torque Tdmp is output to the adder 115.

The target turning torque calculating unit 72 calculates the target turning torque Tt* by causing the adder 115 to sum the angle F/F torque Tffp, the angle F/B torque Tfbp, and the damping torque Tdmp.

The configuration of the angle F/B torque calculating unit 111 will be described below. As illustrated in FIG. 5, the angle F/B torque calculating unit 111 calculates the angle F/B torque Tfbp by performing PID control as the angle F/B control.

Specifically, the angle F/B torque calculating unit 111 includes a proportional component calculating unit 121 that calculates a proportional component Tp, an integral component calculating unit 122 that calculates an integral component Ti, and a differential component calculating unit 123 that calculates a differential component Td. The proportional component Tp calculated by the proportional component calculating unit 121 is output to an adder 124. The integral component Ti calculated by the integral component calculating unit 122 is output to the adder 124. The differential component Td calculated by the differential component calculating unit 123 is output to the adder 124. The angle F/B torque calculating unit 111 calculates the angle F/B torque Tfbp by causing the adder 124 to add the proportional component Tp, the integral component Ti, and the differential component Td. The proportional component calculating unit 121, the integral component calculating unit 122, and the differential component calculating unit 123 will be described below in this order.

Proportional component calculating unit 121

The angle difference Δθp and the detected axial force value Fa_d are input to the proportional component calculating unit 121. The proportional component calculating unit 121 calculates the proportional component Tp by multiplying the angle difference Δθp by a proportional gain Kp which is a control gain and a F/B gain based on the detected axial force value Fa_d.

Specifically, the proportional component calculating unit 121 includes a proportional gain calculating unit 131 that calculates the proportional gain Kp. The detected axial force value Fa_d is input to the proportional gain calculating unit 131. The proportional gain calculating unit 131 calculates the proportional gain Kp based on the detected axial force value Fa_d and outputs the calculated proportional gain Kp to a multiplier 132. In addition to the proportional gain Kp, the angle difference Δθp is input to the multiplier 132. The proportional component calculating unit 121 calculates the proportional component Tp by causing the multiplier 132 to multiply the angle difference Δθp by the proportional gain Kp. The calculated proportional component Tp is output to an adder 124.

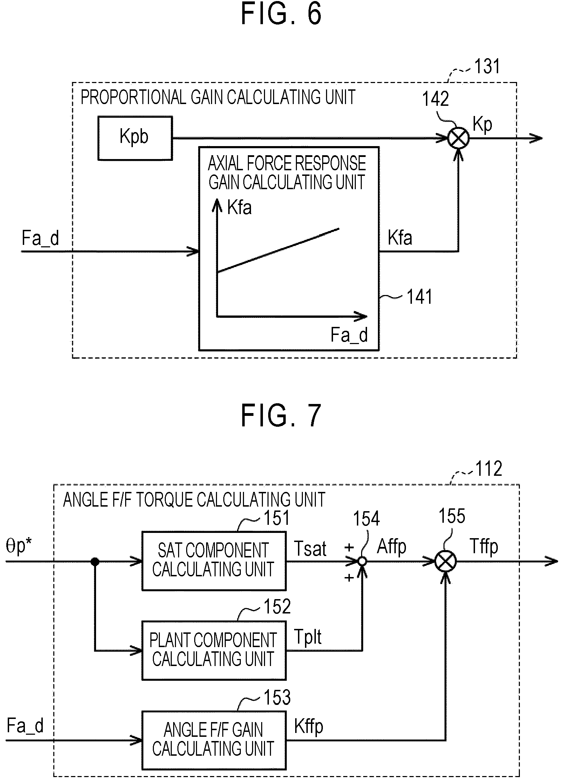

As illustrated in FIG. 6, the proportional gain calculating unit 131 includes an axial force response gain calculating unit 141 that calculates an axial force response gain Kfa corresponding to an axial force. The detected axial force value Fa d is input to the axial force response gain calculating unit 141. The axial force response gain calculating unit 141 includes a map in which a relationship between the detected axial force value Fa_d and the axial force response gain Kfa is defined. The axial force response gain calculating unit 141 calculates the axial force response gain Kfa corresponding to the detected axial force value Fa_d with reference to the map. In the map, the axial force response gain Kfa is set to be greater than zero when the detected axial force value Fa_d is zero. In the map, the axial force response gain Kfa is set to increase linearly with an increase in the absolute value of the detected axial force value Fa_d.

The calculated axial force response gain Kfa is output to a multiplier 142. In addition to the axial force response gain Kfa, a proportional base gain Kpb which is a preset constant is input to the multiplier 142. The proportional gain calculating unit 131 calculates the proportional gain Kp by causing the multiplier 142 to multiply the proportional base gain Kpb by the axial force response gain Kfa. The calculated proportional gain Kp is output to the multipliers 132 illustrated in FIG. 5.

Integral component calculating unit 122

As illustrated in FIG. 5, the angle difference Δθp and the detected axial force value Fa_d are input to the integral component calculating unit 122. The integral component calculating unit 122 calculates an integral base component Tib by multiplying the angle difference Δθp by an integral gain Ki which is a control gain and a F/B gain corresponding to the detected axial force value Fa_d. The integral component calculating unit 122 calculates the integral component Ti by adding an integrated value, which is obtained by integrating values of the integral base component Tib calculated up to the just previous calculation cycle, to the integral base component Tib calculated in the newest calculation cycle.

Specifically, the integral component calculating unit 122 includes an integral gain calculating unit 133 that calculates the integral gain Ki. The detected axial force value Fa_d is input to the integral gain calculating unit 133. The integral gain calculating unit 133 calculates the integral gain Ki based on the detected axial force value Fa_d and outputs the calculated integral gain Ki to a multiplier 134. In addition to the integral gain Ki, the angle difference $\Delta\theta p$ is input to the multiplier 134. The integral component calculating unit 122 calculates the integral base component Tib by causing the multiplier 134 to multiply the angle difference $\Delta\theta p$ by the integral gain Ki. The calculated integral base component Tib is output to an adder 135. In addition to the integral base component Tib, the integrated value is input to the adder 135. The integral component calculating unit 122 calculates the integral component Ti by causing the adder 135 to add the integrated value to the integral base component Tib.

Similarly to the proportional gain calculating unit 131, the integral gain calculating unit 133 calculates the integral gain Ki. That is, the integral gain calculating unit 133 calculates the integral gain Ki by multiplying the integral base gain Kib by the axial force response gain Kfa. The axial force response gain Kfa by which the integral base gain Kib is multiplied may have the same value as the axial force response gain Kfa by which the proportional base gain Kpb is multiplied, or a value which is different therefrom.

Differential component calculating unit 123

The angle difference $\Delta\theta p$ and the detected axial force value Fa_d are input to the differential component calculating unit 123. The differential component calculating unit 123 calculates the differential component Td by multiplying an angular velocity difference $\Delta\omega p$ obtained by differentiating the angle difference $\Delta\theta p$ by a differential gain Kd which is a control gain and a F/B gain corresponding to the detected axial force value Fa_d.

Specifically, the differential component calculating unit 123 includes a differential gain calculating unit 136 that calculates the differential gain Kd. The detected axial force value Fa_d is input to the differential gain calculating unit 136. The differential gain calculating unit 136 calculates the differential gain Kd based on the detected axial force value Fa_d and outputs the calculated differential gain Kd to a multiplier 137. In addition to the differential gain Kd, the angular velocity difference $\Delta\omega p$ is input to the multiplier 137. The differential component calculating unit 123 calculates the differential component Td by causing the multiplier 137 to multiply the angular velocity difference $\Delta\omega p$ by the differential gain Kd.

Similarly to the proportional gain calculating unit 131, the differential gain calculating unit 136 calculates the differential gain Kd. That is, the differential gain calculating unit 136 calculates the differential gain Kd by multiplying a differential base gain Kdb by the axial force response gain Kfa. The axial force response gain Kfa by which the differential base gain Kdb is multiplied may have the same value as the axial force response gain Kfa by which the proportional base gain Kpb is multiplied, or a value which is different therefrom.

As described above, the angle F/B torque calculating unit 111 calculates the angle F/B torque Tfbp while changing the proportional gain Kp, the integral gain Ki, and the differential gain Kd based on the axial force applied to the rack shaft 22.

The configuration of the angle F/F torque calculating unit 112 will be described below. As illustrated in FIG. 7, the angle F/F torque calculating unit 112 includes a SAT component calculating unit 151 that calculates an SAT component Tsat, a plant component calculating unit 152 that calculates a plant component Tplt, and an angle F/F gain calculating unit 153 that calculates an angle F/F gain Kffp. The SAT component Tsat represents a torque for compensating for disturbance corresponding to a self-aligning torque applied to the turning wheels 5. The plant component Tplt represents a torque for compensating for disturbance based on plant characteristics of a system with the q-axis current command value Iqt* for the turning-side motor 32 as an input and with the turning-corresponding angle $\theta p$ as an output. The angle F/F torque calculating unit 112 calculates the angle F/F torque Tffp by multiplying the angle F/F gain Kffp by an added value obtained by adding the SAT component Tsat and the plant component Tplt.

Specifically, the target turning-corresponding angle $\theta p^*$ is input to the SAT component calculating unit 151. The SAT component calculating unit 151 calculates the SAT component Tsat by multiplying the target turning-corresponding angle $\theta p^*$ by a preset SAT coefficient. The SAT coefficient is a coefficient representing a relationship between the self-aligning torque applied to the turning wheels 5 and the turning-corresponding angle $\theta p$ and is set in advance. The calculated SAT component Tsat is output to an adder 154.

The target turning-corresponding angle $\theta p^*$ is input to the plant component calculating unit 152. The plant component calculating unit 152 calculates an output which is obtained by inputting the target turning-corresponding angle $\theta p^*$ to a preset transmission function representing the plant characteristics of the system as the plant component Tplt. The calculated plant component Tplt is output to the adder 154.

The detected axial force value Fa_d is input to the angle F/F gain calculating unit 153. Similarly to the proportional gain calculating unit 131, the angle F/F gain calculating unit 153 calculates the angle F/F gain Kffp. That is, the angle F/F gain calculating unit 153 calculates the angle F/F gain Kffp by multiplying an F/F base gain Kffbp by the axial force response gain Kfa. The axial force response gain Kfa by which the F/F base gain Kffbp is multiplied may have the same value as the axial force response gain Kfa by which the proportional base gain Kpb is multiplied, or a value which is different therefrom. The calculated angle F/F gain Kffp is output to a multiplier 155.

The angle F/F torque calculating unit 112 calculates an added value Affp by causing the adder 154 to sum the SAT component Tsat and the plant component Tplt. The calculated added value Affp is output to the multiplier 155. The angle F/F torque calculating unit 112 calculates the angle F/F torque Tffp by causing the multiplier 155 to multiply the added value Affp by the angle F/F gain Kffp. In this way, the angle F/F torque calculating unit 112 calculates the angle F/F torque Tffp while changing the angle F/F gain Kffp based on the axial force applied to the rack shaft 22.

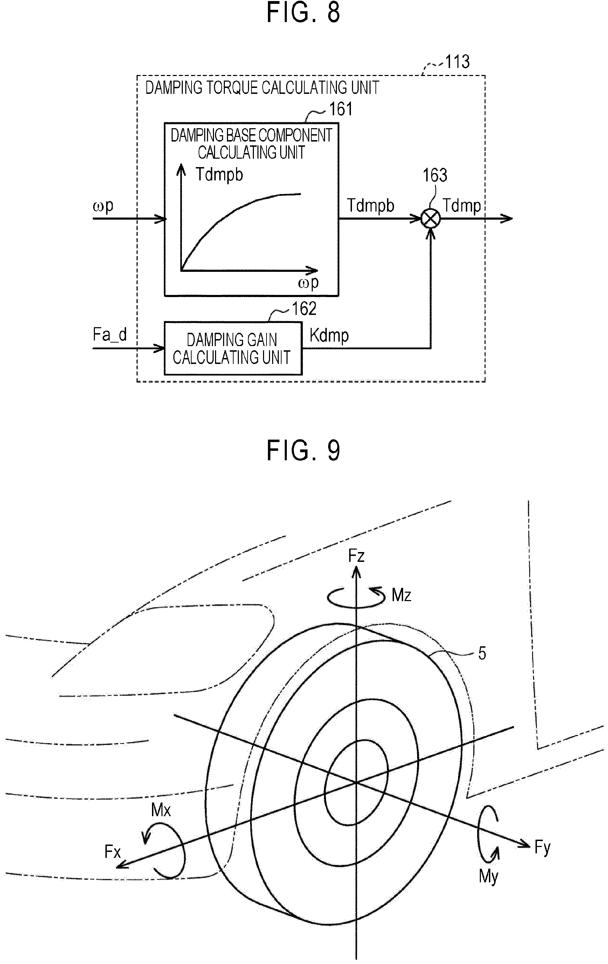

The configuration of the damping torque calculating unit 113 will be described below. As illustrated in FIG. 8, the damping torque calculating unit 113 includes a damping base component calculating unit 161 that calculates a damping base component Tdmpb and a damping gain calculating unit 162 that calculates a damping gain Kdmp. The damping torque calculating unit 113 calculates the damping torque Tdmp by multiplying the damping base component Tdmpb by the damping gain Kdmp.

Specifically, the turning-corresponding angular velocity ωp is input to the damping base component calculating unit 161. The damping gain calculating unit 162 includes a map in which a relationship between the turning-corresponding angular velocity ωp and the damping base component Tdmpb is defined. The damping base component calculating unit 161 calculates the damping base component Tdmpb of which the absolute value corresponds to the turning-corresponding angular velocity ωp, with reference to the amp. The damping base component calculating unit 161 sets the sign of the damping base component Tdmpb to the same sign as that of the turning-corresponding angular velocity ωp. In the map, the damping base component Tdmpb is set to be zero when the turning-corresponding angular velocity ωp is zero. In the map, the damping base component Tdmpb is set to increase with an increase in the absolute value of the turning-corresponding angular velocity ωp. The calculated damping base component Tdmpb is output to a multiplier 163.

The detected axial force value Fa_d is input to the damping gain calculating unit 162. The damping gain calculating unit 162 calculates the damping gain Kdmp similarly to the proportional gain calculating unit 131. That is, the damping gain calculating unit 162 calculates the damping gain Kdmp by multiplying the damping base gain Kdmpb by the axial force response gain Kfa. The axial force response gain Kfa by which the damping base gain Kdmpb is multiplied may have the same value as the axial force response gain Kfa by which the proportional base gain Kpb is multiplied, or a value which is different therefrom. The calculated damping gain Kdmp is output to the multiplier 163.

The damping torque calculating unit 113 calculates the damping torque Tdmp by causing the multiplier 163 to multiply the damping base component Tdmpb by the damping gain Kdmp. In this way, the damping torque calculating unit 113 calculates the damping torque Tdmp while changing the damping gain Kdmp based on the axial force applied to the rack shaft 22.

As described above, the target turning torque calculating unit 72 calculates the angle F/B torque Tfbp, the angle F/F torque Tffp, and the damping torque Tdmp based on the axial force applied to the rack shaft 22 by changing the control gain, and calculates the target turning torque Tt* based thereon. Accordingly, it is possible to achieve optimization of angle control.

Operations and advantages of this embodiment will be described below. (1) Since the target turning torque calculating unit 72 changes the control gain which is used for angle control based on the detected axial force value Fa_d, it is possible to achieve optimization of angle control according to the axial force applied to the rack shaft 22 and to decrease a driver's uncomfortable feeling.

(2) Since the target turning torque calculating unit 72 adjusts the control gain based on the detected axial force value Fa_d which is the axial force directly detected by the axial force sensor 46, it is possible to achieve optimization of angle control in appropriate consideration of the axial force applied to the rack shaft 22.

(3) The target turning torque calculating unit 72 performs angle F/B control for causing the turning-corresponding angle θp to conform to the target turning-corresponding angle θp*, angle F/F control based on the target turning-corresponding angle θp*, and damping control based on the turning-corresponding angular velocity ωp which a rate of change of the turning-corresponding angle θp as the angle control. The control gain which is changed based on the detected axial force value Fa_d includes the proportional gain Kp, the integral gain Ki, the differential gain Kd, the angle F/F gain Kffp, and the damping gain Kdmp. Accordingly, it is possible to appropriately adjust the turning-corresponding angle θp to the target turning-corresponding angle θp*.

Second embodiment

A steering control device according to a second embodiment will be described below with reference to the drawings. For the purpose of convenience of description, the same elements will be referred to by the same reference signs as in the first embodiment and description thereof will not be repeated.

In this embodiment, the front-left wheel sensor 421 detects loads which are applied to the left turning wheel 5 in addition to the wheel speed Vfl. The front-right wheel sensor 42r detects loads which are applied to the right turning wheel 5 in addition to the wheel speed Vfr.

Specifically, as illustrated in FIG. 9, the front-left wheel sensor 421 detects a longitudinal load Fx in an x-axis direction which is a longitudinal direction of the vehicle (i.e., vehicle longitudinal direction), a lateral load Fy in a y-axis direction which is a lateral direction of the vehicle (i.e., vehicle lateral direction), and a vertical load Fz in a z-axis direction which is a vehicle vertical direction of the vehicle (i.e., vehicle vertical direction) based on a force applied to the left turning wheel 5. The front-left wheel sensor 42l detects a roll moment load Mx in a roll direction, a pitch moment load My in a pitch direction, and a yaw moment load Mz in a yaw direction based on a force applied to the turning wheels 5. Similarly, the front-right wheel sensor 42r detects a longitudinal load Fx, a lateral load Fy, a vertical load Fz, a roll moment load Mx, a pitch moment load My, and a yaw moment load Mz. The plus and minus (i.e., positive and negative) directions of the loads Fx, Fy, Fz, Mx, My, and Mz in the front-left wheel sensor 42l and those in the front-right wheel sensor 42r are the same.

The axial force applied to the rack shaft 22 is obtained by transmitting, to the rack shaft 22, the longitudinal load Fx, the lateral load Fy, the vertical load Fz, the roll moment load Mx, the pitch moment load My, and the yaw moment load Mz that are applied to the turning wheel 5, and combining the loads. That is, the front-left wheel sensor 42l and the front-right wheel sensor 42r correspond to a tire force sensor and an axial force-related sensor.

The front-left wheel sensor 42l outputs a detected longitudinal load value Fx_d which is a detected value of the longitudinal load Fx, a detected lateral load value Fy_d which is a detected value of the lateral load Fy, a detected vertical load value Fz_d which is a detected value of the vertical load Fz, a detected roll moment load value Mx_d which is a detected value of the roll moment load Mx, a detected pitch moment load value My_d which is a detected value of the pitch moment load My, and a detected yaw moment load value Mz_d which is a detected value of the yaw moment load Mz to the steering control device 1. Similarly, the front-right wheel sensor 42r outputs a detected longitudinal load value Fx_d, a detected lateral load value Fy_d, a detected vertical load value Fz_d, a detected roll moment load value Mx_d, a detected pitch moment load value My_d, and a detected yaw moment load value Mz_d to the steering control device 1.

The steering control device 1 changes a control gain of angle control based on the detected load values. The steering control device 1 according to this embodiment uses, as each detected load value, an average value of the corresponding detected load value detected by the front-left wheel sensor 42l and the corresponding detected load value detected by the front-right wheel sensor 42r.

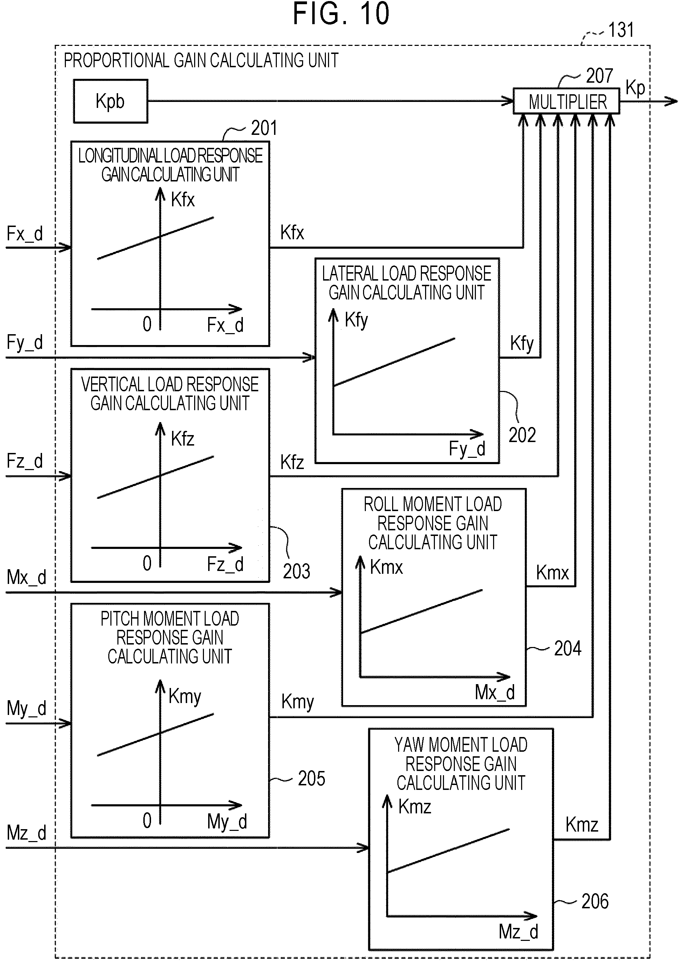

As illustrated in FIG. 10, the detected longitudinal load value Fx_d, the detected lateral load value Fy_d, the detected vertical load value Fz_d, the detected roll moment load value Mx_d, the detected pitch moment load value My_d, and the detected yaw moment load value Mz_d are input to the proportional gain calculating unit 131. The proportional gain calculating unit 131 includes a longitudinal load response gain calculating unit 201 that calculates a longitudinal load response gain Kfx, a lateral load response gain calculating unit 202 that calculates a lateral load response gain Kfy, and a vertical load response gain calculating unit 203 that calculates a vertical load response gain Kfz. The proportional gain calculating unit 131 includes a roll moment load response gain calculating unit 204 that calculates a roll moment load response gain Kmx, a pitch moment load response gain calculating unit 205 that calculates a pitch moment load response gain Kmy, and a yaw moment load response gain calculating unit 206 that calculates a yaw moment load response gain Kmz. The proportional gain calculating unit 131 calculates a proportional gain Kp by multiplying a proportional base gain Kpb by the longitudinal load response gain Kfx, the lateral load response gain Kfy, the vertical load response gain Kfz, the roll moment load response gain Kmx, the pitch moment load response gain Kmy, and the yaw moment load response gain Kmz.

Specifically, the detected longitudinal load value Fx_d is input to the longitudinal load response gain calculating unit 201. The longitudinal load response gain calculating unit 201 includes a map in which a relationship between the detected longitudinal load value Fx_d and the longitudinal load response gain Kfx is defined. The longitudinal load response gain calculating unit 201 calculates the longitudinal load response gain Kfx based on the detected longitudinal load value Fx_d with reference to the map. In the map, the longitudinal load response gain Kfx is set to be greater than zero when the detected longitudinal load value Fx_d is zero. In the map, the longitudinal load response gain Kfx is set to increase linearly with an increase of the detected longitudinal load value Fx_d. The calculated longitudinal load response gain Kfx is output to a multiplier 207.

The detected lateral load value Fy_d is input to the lateral load response gain calculating unit 202. The lateral load response gain calculating unit 202 includes a map in which a relationship between the detected lateral load value Fy_d and the lateral load response gain Kfy is defined. The lateral load response gain calculating unit 202 calculates the lateral load response gain Kfy based on the detected lateral load value Fy_d with reference to the map. In the map, the lateral load response gain Kfy is set to be greater than zero when the detected lateral load value Fy_d is zero. In the map, the lateral load response gain Kfy is set to increase linearly with an increase of the absolute value of the detected lateral load value Fy_d. The calculated lateral load response gain Kfy is output to the multiplier 207.

The detected vertical load value Fz_d is input to the vertical load response gain calculating unit 203. The vertical load response gain calculating unit 203 includes a map in which a relationship between the detected vertical load value Fz_d and the vertical load response gain Kfz is defined. The vertical load response gain calculating unit 203 calculates the vertical load response gain Kfz based on the detected vertical load value Fz_d with reference to the map. In the map, the vertical load response gain Kfz is set to be greater than zero when the detected vertical load value Fz_d is zero. In the map, the vertical load response gain Kfz is set to increase linearly with an increase of the detected vertical load value Fz_d. The calculated vertical load response gain Kfz is output to the multiplier 207.

The detected roll moment load value Mx_d is input to the roll moment load response gain calculating unit 204. The roll moment load response gain calculating unit 204 includes a map in which a relationship between the detected roll moment load value Mx_d and the roll moment load response gain Kmx is defined. The roll moment load response gain calculating unit 204 calculates the roll moment load response gain Kmx based on the detected roll moment load value Mx_d with reference to the map. In the map, the roll moment load response gain Kmx is set to be greater than zero when the detected roll moment load value Mx_d is zero. In the map, the roll moment load response gain Kmx is set to increase linearly with an increase of the absolute value of the detected roll moment load value Mx_d. The calculated roll moment load response gain Kmx is output to the multiplier 207.

The detected pitch moment load value My_d is input to the pitch moment load response gain calculating unit 205. The pitch moment load response gain calculating unit 205 includes a map in which a relationship between the detected pitch moment load value My_d and the pitch moment load response gain Kmy is defined. The pitch moment load response gain calculating unit 205 calculates the pitch moment load response gain Kmy based on the detected pitch moment load value My_d with reference to the map. In the map, the pitch moment load response gain Kmy is set to be greater than zero when the detected pitch moment load value My_d is zero. In the map, the pitch moment load response gain Kmy is set to increase linearly with an increase of the detected pitch moment load value My_d. The calculated pitch moment load response gain Kmy is output to the multiplier 207.

The detected yaw moment load value Mz_d is input to the yaw moment load response gain calculating unit 206. The yaw moment load response gain calculating unit 206 includes a map in which a relationship between the detected yaw moment load value Mz_d and the yaw moment load response gain Kmz is defined. The yaw moment load response gain calculating unit 206 calculates the yaw moment load response gain Kmz based on the detected yaw moment load value Mz_d with reference to the map. In the map, the yaw moment load response gain Kmz is set to be greater than zero when the detected yaw moment load value Mz_d is zero. In the map, the yaw moment load response gain Kmz is set to increase linearly with an increase of the absolute value of the detected yaw moment load value Mz_d. The calculated yaw moment load response gain Kmz is output to the multiplier 207.

In addition to the longitudinal load response gain Kfx, the lateral load response gain Kfy, the vertical load response gain Kfz, the roll moment load response gain Kmx, the pitch moment load response gain Kmy, and the yaw moment load response gain Kmz, the proportional base gain Kpb is input to the multiplier 207. The proportional gain calculating unit 131 calculates the proportional gain Kp by causing the multiplier 207 to multiply the proportional base gain Kpb by the longitudinal load response gain Kfx, the lateral load response gain Kfy, the vertical load response gain Kfz, the roll moment load response gain Kmx, the pitch moment load response gain Kmy, and the yaw moment load response gain Kmz. Accordingly, the proportional gain Kp is changed according to the longitudinal load Fx, the lateral load Fy, the vertical load Fz, the roll moment load Mx, the pitch moment load My, and the yaw moment load Mz which are applied to the turning wheels 5. The calculated proportional gain Kp is output to the multiplier 132 illustrated in FIG. 5.

Similarly, the detected load values Fx_d, Fy_d, Fz_d, Mx_d, My_d, and Mz_d are input to the integral gain calculating unit 133, the differential gain calculating unit 136, the angle F/F gain calculating unit 153, and the damping gain calculating unit 162. The gain calculating units 133, 136, 153, and 162 change the control gain according to the corresponding loads Fx, Fy, Fz, Mx, My, and Mz similarly to the proportional gain calculating unit 131.

Accordingly, the target turning torque calculating unit 72 calculates the angle F/B torque Tfbp, the angle F/F torque Tffp, and the damping torque Tdmp according to the longitudinal load Fx, the lateral load Fy, the vertical load Fz, the roll moment load Mx, the pitch moment load My, and the yaw moment load Mz which are applied to the turning wheels 5 by changing the control gain, and calculates the target turning torque Tt* based thereon. Accordingly, it is possible to achieve optimization of angle control.

Operations and advantages of this embodiment will be described below. In addition to the same operations and advantages as the operations and advantages of (3) in the first embodiment, the following operations and advantages can be achieved in this embodiment.

(4) The target turning torque calculating unit 72 changes the control gain which is used for angle control based on the detected longitudinal load value Fx_d, the detected lateral load value Fy_d, the detected vertical load value Fz_d, the detected roll moment load value Mx_d, the detected pitch moment load value My_d, and the detected yaw moment load value Mz_d. Accordingly, it is possible to achieve optimization of angle control according to the axial force applied to the rack shaft 22 and to decrease a driver's uncomfortable feeling.

(5) The target turning torque calculating unit 72 adjusts the control gain based on the detected longitudinal load value Fx_d, the detected lateral load value Fy_d, the detected vertical load value Fz_d, the detected roll moment load value Mx_d, the detected pitch moment load value My_d, and the detected yaw moment load value Mz_d. Accordingly, with the aforementioned configuration, it is possible to achieve fine optimization of angle control based on components affecting the axial force.

The aforementioned embodiments can be modified as follows. The aforementioned embodiments and the following modified examples can be combined unless technical contradiction arises. In the aforementioned embodiments, the execution mode of the angle control can be appropriately modified. For example, at least one of the angle F/F control and the damping control may not be performed.

In the aforementioned embodiments, the angle F/B torque calculating unit 111 performs PID control as the angle F/B control, but the invention is not limited thereto and, for example, PI control may be performed. The execution mode of the angle F/B control can be appropriately modified.

In the aforementioned embodiments, the angle F/F torque calculating unit 112 may calculate the angle F/F torque Tffp based on only one of the SAT component Tsat and the plant component Tplt.

In the first embodiment, the proportional gain Kp, the integral gain Ki, the differential gain Kd, the angle F/F gain Kffp, and the damping gain Kdmp are changed based on the detected axial force value Fa d, but the invention is not limited thereto. As long as at least one of the control gains is changed based on the detected axial force value Fa d, the other gains may not be changed.

In the second embodiment, a longitudinal acceleration in the longitudinal direction of the vehicle may be detected and the detected longitudinal acceleration value may be used instead of the detected longitudinal load value Fx_d. A lateral acceleration in the lateral direction of the vehicle may be detected and the detected lateral acceleration value may be used instead of the detected lateral load value Fy_d. A vertical acceleration in the vertical direction of the vehicle may be detected and the detected vertical acceleration value may be used instead of the detected vertical load value Fz_d.

In the second embodiment, the proportional gain Kp, the integral gain Ki, the differential gain Kd, the angle F/F gain Kffp, and the damping gain Kdmp are changed based on the detected longitudinal load value Fx_d, the detected lateral load value Fy_d, the detected vertical load value Fz_d, the detected roll moment load value Mx_d, the detected pitch moment load value My_d, and the detected yaw moment load value Mz_d, but the invention is not limited thereto. As long as at least one of the control gains is changed, the other gains may not be changed.

In the second embodiment, the proportional gain Kp is changed based on the detected longitudinal load value Fx_d, the detected lateral load value Fy_d, the detected vertical load value Fz_d, the detected roll moment load value Mx_d, the detected pitch moment load value My_d, and the detected yaw moment load value Mz_d. However, the proportional gain Kp may not be changed based on all of the detected load values Fx_d, Fy_d, Fz_d, Mx_d, My_d, and Mz_d and the proportional gain Kp may be changed based on at least one of the detected load values Fx_d, Fy_d, Fz_d, Mx_d, My_d, and Mz_d. This same is applied to the integral gain Ki, the differential gain Kd, the angle F/F gain Kffp, and the damping gain Kdmp.

In the aforementioned embodiments, the target reaction torque Ts* is calculated by summing the torque F/B component Tfbt and the steering angle F/B component Tfbh using the torque F/B component Tfbt which is calculated as the input torque base component through execution of the torque F/B control for causing the steering torque Th to conform to the target steering torque Th*. The invention is not limited thereto and the calculation mode of the target reaction torque Ts* can be appropriately modified. For example, in another calculation mode for the input torque base component, an input torque base component of which the absolute value increases as the absolute value of the steering torque Th increases may be calculated. For example, a mode in which the steering angle F/B control is not performed and the target reaction torque Ts* is directly calculated based on the input torque Tin* or a mode in which the target reaction torque Ts* is directly calculated based on the reaction component Fir may be employed. For example, a target steering torque may be calculated based on the reaction component Fir and a value obtained through execution of the torque F/B control for causing the steering torque Th to conform to the target steering torque may be calculated as the target reaction torque Ts*.

In the aforementioned embodiments, the control gain which is used for the angle F/B control performed by the steering angle F/B component calculating unit 84 may be changed similarly to the control gain which is used for the angle F/B control performed by the target turning torque calculating unit 72. The target reaction torque calculating unit 63 may perform the same control as the angle control which is performed by the target turning torque calculating unit 72, as the angle control for adjusting the steering angle θh to the target steering angle.

In the aforementioned embodiments, an interior permanent magnet synchronous motor (IPMSM) may be used as the steering-side motor 13. An interior permanent magnet synchronous motor may be used as the turning-side motor 32. In the aforementioned embodiments, the steering device 2 to be controlled has a linkless structure in which transmission of power between the steering unit 4 and the turning unit 6 is cut off, but the invention is not limited thereto. A steering device with a structure in which transmission of power between the steering unit 4 and the turning unit 6 can be cut off by a clutch may be employed as a control target.

In the aforementioned embodiments, the steering device 2 to be controlled (i.e., a control target) is a steer-by-wire steering device, but the invention is not limited thereto. For example, an electric power steering device to which a motor torque is applied as an assist force may be employed as a control target.

In the aforementioned embodiments, the steering control device 1 is not limited to a steering control device including a CPU and a memory and performing software processes. For example, a dedicated hardware circuit (for example, an ASIC) that performs at least some of the software processes which are performed in the aforementioned embodiments may be provided. That is, the steering control device may have at least one of the following configurations (a) to (c). (a) A processor that performs all the processes in accordance with a program, and a program storage device such as a ROM that stores the program are provided. (b) A processor that performs some of the processes in accordance with a program, a program storage device, and a dedicated hardware circuit that performs the other processes are provided. (c) A dedicated hardware circuit that performs all the processes is provided. Here, the number of software processing circuits each of which includes a processor and a program storage device or the number of dedicated hardware circuits may be two or more. That is, the processes may be performed by processing circuitry including at least one of i) one or more software processing circuits and ii) one or more dedicated hardware circuits.

Technical concepts which can be understood from the embodiments and the modified examples will be supplemented below: (1) A steering control device in which the steering device has a structure in which transmission of power between a steering unit and a turning unit that turns turning wheels in accordance with steering input to the steering unit is cut off and the motor is a turning-side motor that applies the motor torque as a turning force which is a force for turning the turning wheels.

**Claims**

1.   A steering control device configured to control a steering device to which a motor torque is applied from an actuator with a motor as a drive source, the steering control device **characterized by** comprising:

   a control unit configured to output a motor control signal for controlling operation of the motor; and
   a drive circuit configured to supply a drive electric power to the motor based on the motor control signal,
   wherein the control unit is configured to:

   calculate a torque command value which is a target value of the motor torque based on execution of angle control for adjusting a convertible angle which is able to be converted to a rotation angle of the motor to a target angle;
   calculate the motor control signal based on the torque command value; and
   change a control gain which is used for the angle control based on a detection value from an axial force-related sensor configured to detect an axial force-related value related to an axial force applied to a turning shaft connected to turning wheels (5).

2.   The steering control device according to claim 1, **characterized in that**:

   the axial force-related sensor is an axial force sensor that detects the axial force which is applied to the turning shaft; and
   the control unit is configured to change the control gain based on a detected axial force value detected by the axial force sensor.

3.   The steering control device according to claim 1, **characterized in that**:

   the axial force-related sensor is a tire force sensor that detects at least one of a longitudinal load in a vehicle longitudinal direction, a lateral load in a vehicle lateral direction, a vertical load in a vehicle vertical direction, a roll moment load in a roll direction, a pitch moment load in a pitch direction, and a yaw moment load in a yaw direction which are applied to each of the turning wheels (5); and
   the control unit is configured to change the control gain based on at least one of a detected value of the longitudinal load, a detected value of the lateral load, a detected value of the vertical load, a detected value of the roll moment load, a detected value of the pitch moment load, and a detected value of the yaw moment load, the at least one of the detected value of the longitudinal load, the detected value of the lateral load, the detected value of the vertical load, the detected value of the roll moment load, the detected value of the pitch moment load, and the detected value of the yaw moment load being obtained by the tire force sensor.

4.   The steering control device according to any one of claims 1 to 3, **characterized in that**:

   the angle control includes feedback control for causing the convertible angle to conform to the target angle; and
   the control gain includes a feedback gain which is used for the feedback control.

5. The steering control device according to any one of claims 1 to 4, **characterized in that**:

   the angle control includes feedforward control based on the target angle; and
   the control gain includes a feedforward gain which is used for the feedforward control.

6. The steering control device according to any one of claims 1 to 5, **characterized in that**:

   the angle control includes damping control based on a target angular velocity which is a rate of change of the target angle; and
   the control gain includes a damping gain which is used for the damping control.

FIG. 1

FIG. 2

Block diagram (13) STEERING-SIDE MOTOR; (32) TURNING-SIDE MOTOR.

STEERING CONTROL DEVICE (1)

STEERING-SIDE MICROCOMPUTER (51)
- STEERING ANGLE CALCULATING UNIT (61) — θh
- VEHICLE SPEED CALCULATING UNIT (62) — Vb
- TARGET REACTION TORQUE CALCULATING UNIT (63) — Ts*
- TARGET TURNING-CORRESPONDING ANGLE CALCULATING UNIT (64) — θh*, θp*
- STEERING-SIDE MOTOR CONTROL SIGNAL CALCULATING UNIT (65) — Ms
- STEERING-SIDE DRIVE CIRCUIT (52), B, (54)(53), Ius, Ivs, Iws

TURNING-SIDE MICROCOMPUTER (56)
- TURNING-CORRESPONDING ANGLE CALCULATING UNIT (71) — θp
- TARGET TURNING TORQUE CALCULATING UNIT (72) — Tt*
- TURNING-SIDE MOTOR CONTROL SIGNAL CALCULATING UNIT (73) — Mt, Iqt
- TURNING-SIDE DRIVE CIRCUIT (57), B, (59)(58), Iut, Ivt, Iwt

Inputs: θs, Th, Vfl, Vfr, Fa_d, θt

# FIG. 3

# FIG. 4

TARGET TURNING TORQUE CALCULATING UNIT — 72

Fa_d

ANGLE F/F TORQUE CALCULATING UNIT — 112, Tffp

θp*
θp
+ Δθp — 114

ANGLE F/B TORQUE CALCULATING UNIT — 111, Tfbp

+ + Tt* — 115

S ωp

DAMPING TORQUE CALCULATING UNIT — 113, Tdmp

# FIG. 5

ANGLE F/B TORQUE CALCULATING UNIT — 111

PROPORTIONAL COMPONENT CALCULATING UNIT — 121

Δθp

Fa_d

PROPORTIONAL GAIN CALCULATING UNIT — 131, Kp

132 — Tp

124, Tfbp

INTEGRAL COMPONENT CALCULATING UNIT

INTEGRAL GAIN CALCULATING UNIT — 133, Ki

134, Tib

1/Z

+ Ti — 135

122

INTEGRAL COMPONENT CALCULATING UNIT

S Δωp

DIFFERENTIAL GAIN CALCULATING UNIT — 136, Kd

137 — Td

123

# FIG. 6

PROPORTIONAL GAIN CALCULATING UNIT — 131

Kpb

142 — Kp

AXIAL FORCE RESPONSE GAIN CALCULATING UNIT

Kfa

Fa_d

Kfa

— 141

Fa_d

# FIG. 7

ANGLE F/F TORQUE CALCULATING UNIT — 112

θp*

SAT COMPONENT CALCULATING UNIT — 151

Tsat

154 + Affp

155 Tffp

PLANT COMPONENT CALCULATING UNIT — 152

Tplt

+

Fa_d

ANGLE F/F GAIN CALCULATING UNIT — 153

Kffp

# FIG. 8

# FIG. 9

# FIG. 10

PROPORTIONAL GAIN CALCULATING UNIT — 131

Kpb

~ 207 Kp
MULTIPLIER

~ 201
LONGITUDINAL LOAD RESPONSE GAIN CALCULATING UNIT

Kfx

Fx_d

Kfx

0    Fx_d

LATERAL LOAD RESPONSE GAIN CALCULATING UNIT

Kfy

Fy_d

Kfy

Fy_d    202

VERTICAL LOAD RESPONSE GAIN CALCULATING UNIT

Kfz

Fz_d

Kfz

0    Fz_d    203

ROLL MOMENT LOAD RESPONSE GAIN CALCULATING UNIT

Kmx

Mx_d

Kmx

Mx_d    204

PITCH MOMENT LOAD RESPONSE GAIN CALCULATING UNIT

Kmy

My_d

Kmy

0    My_d    205

YAW MOMENT LOAD RESPONSE GAIN CALCULATING UNIT

Kmz

Mz_d

Kmz

Mz_d    206

23

Europäisches
Patentamt

European
Patent Office

Office européen
des brevets

# EUROPEAN SEARCH REPORT

Application Number

EP 21 16 4544

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 2020/062294 A1 (KODERA TAKASHI [JP] ET AL) 27 February 2020 (2020-02-27)<br>* paragraphs [0021] - [0035], [0061], [0062]; claims 1,2; figures 1,2,7 *<br>----- | 1-3,6<br><br>4,5 | INV.<br>B62D6/00<br>B62D6/04 |
| A | EP 3 575 185 A1 (JTEKT CORP [JP])<br>4 December 2019 (2019-12-04)<br>* paragraphs [0069] - [0073], [0077], [0078], [0207], [0208], [0213] - [0215]; figures 1,2,6 *<br>----- | 1-6 | |

TECHNICAL FIELDS
SEARCHED      (IPC)

B62D

The present search report has been drawn up for all claims

| Place of search | Date of completion of the search | Examiner |
|---|---|---|
| The Hague | 12 August 2021 | Janusch, Stefan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 16 4544

This annex lists the patent family members relating to the patent documents cited in the above-mentioned European search report.
The members are as contained in the European Patent Office EDP file on
The European Patent Office is in no way liable for these particulars which are merely given for the purpose of information.

12-08-2021

| Patent document cited in search report | | Publication date | Patent family member(s) | | Publication date |
|---|---|---|---|---|---|
| US 2020062294 | A1 | 27-02-2020 | CN | 110857116 A | 03-03-2020 |
| | | | EP | 3632774 A1 | 08-04-2020 |
| | | | JP | 2020029194 A | 27-02-2020 |
| | | | US | 2020062294 A1 | 27-02-2020 |
| EP 3575185 | A1 | 04-12-2019 | CN | 110550093 A | 10-12-2019 |
| | | | EP | 3575185 A1 | 04-12-2019 |
| | | | US | 2019367075 A1 | 05-12-2019 |

EPO FORM P0459

For more details about this annex : see Official Journal of the European Patent Office, No. 12/82

**EP 3 885 236 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017149373 A
- JP 2017165219 A